# EUROPÄISCHE PATENTSCHRIFT

(11) **EP 0 735 074 B1**
(45) Veröffentlichungstag und Bekanntmachung des Hinweises auf die Patenterteilung: **18.06.2003**
(21) Anmeldenummer: 96104208.2
(22) Anmeldetag: 16.03.1996
(51) Int. Cl.: C08G 64/30

(54) **Verfahren zur Herstellung von thermoplastischen Polycarbonat**
Process for the preparation of thermoplastic polycarbonate
Procédé pour la préparation de polycarbonate thermoplastique

(30) Priorität: 29.03.1995 DE 19511467
(43) Veröffentlichungstag der Anmeldung: 02.10.1996
(73) Patentinhaber: BAYER AG, 51368 Leverkusen (DE)
(72) Erfinder: Kühling, Steffen, Dr., 40670 Meerbusch (DE); Zaby, Gottfried, Dr., 51375 Leverkusen (DE); Hucks, Uwe, 46519 Alpen (DE); Fischer, Thomas, Dr., 47809 Krefeld (DE)

(56) Entgegenhaltungen:
- EP-A- 0 360 578
- EP-A- 0 520 805
- EP-A- 0 712 878
- CHEMICAL ABSTRACTS, vol. 107, no. 24, 14.Dezember 1987 Columbus, Ohio, US; abstract no. 218262, XP002030996 & RO 88 442 A (COMBINATUL CHIMIC)

## Beschreibung

Gegenstand der vorliegenden Erfindung ist ein Schmelzumesterungsverfahren zur Herstellung von thermoplastischem Polycarbonat, ausgehend von aromatischen Diphenolen, Kohlensäurediarylestem und gegebenenfalls Verzweigern und/oder Monophenolen unter Verwendung von Katalsyatoren bei Temperaturen zwischen 80°C und 400°C und Drucken von 1000 mbar bis 0,01 mbar, das dadurch gekennzeichnet ist, dass man als Katalysatoren Festbettkatalysatoren verwendet.

Die nach dem erfindungsgemäßen Verfahren hergestellten Polycarbonate sind lösungsmittelfrei, mit heller Eigenfarbe ausgestattet und weitgehend frei von unerwünschten Fehlstellen im Polycarbonat.

Die Herstellung von aromatischen Oligo-/Polycarbonaten nach dem Schmelzeumesterungsverfahren ist literaturbekannt und beispielsweise in Chemistry and Physics of Polycarbonates, Polymer Reviews, H. Schnell, Vol. 9, John Wiley and Sons, Inc. (1964) sowie der DP-1 031 512 vorbeschrieben.

In den obengenannten Literaturstellen und den dort zitierten Literaturangaben werden als Katalysatoren homogen wirkende, basische Alkali-, Erdalkali- und Übergangsmetall-hydroxide, -alkoholate, -carbonate, -acetate, -boranate, -hydrogenphosphate und -hydride beschrieben.

Es wurde nun gefunden, dass die Umesterung von aromatischen Diphenolen mit Kohlensäurediarylestern an Festbettkatalysatoren durchgeführt werden kann, wobei die Festbettkatalysatoren Zeolithe oder polymere, thermisch stabile, heterogene Katalysatoren sind.

Für das erfindungsgemäße Verfahren geeignete Diphenole sind solche der Formel (I) 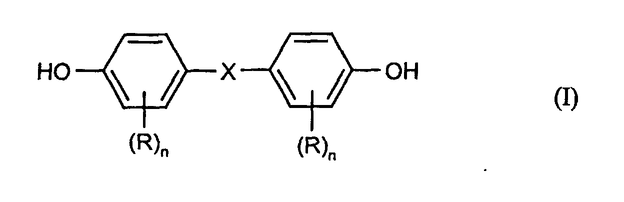 worin
- X =: C₁-C₈-Alkyliden oder Cycloalkyliden, S oder eine Einfachbindung und
- R =: CH₃, Cl oder Br und
- n =: Null, 1 oder 2 ist.

Bevorzugte Diphenole sind z.B.:
4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die vorstehend genannten Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxytriphenyl)-methyl)-benzol und insbesondere
α,α',α"-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 mol%, bezogen auf eingesetzte Diphenole, an Verzweigem, können mit Diphenolen zusammen eingesetzt werden.

Kohlensäurediester im Sinne vorliegender Erfindung sind Di-C₆-C₂₀-arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, dass die Reaktionskomponenten, also die Diphenole und die Kohlensäurediarylester frei von Alkali- und Erdalkaliionen sind, wobei Mengen von kleiner 0,1 ppm an Alkali- und Erdalkaliionen toleriert werden können. Derart reine Diphenole bzw. Diphenole sind erhältlich, indem man die Kohlensäurediarylester bzw. Diphenole umkristallisiert, wäscht und/oder destilliert. Beim erfindungsgemäßen Verfahren soll der Gehalt an Alkali- und Erdalkalimetallionen sowohl im Diphenol als auch im Kohlensäurediester einen Wert von <0,1 ppm betragen. Der Gesamtgehalt an Chlor der Rohstoffe sollte einen Wert von 2 ppm nicht übersteigen und der Gehalt an verseifbarem Chlor des Kohlensäurediesters einen Wert von 0,05 ppm nicht übersteigen. Für die Farbe des resultierenden Polycarbonats ist es von Vorteil, wenn die Rohstoffe, also die Diphenole und die Kohlensäurediarylester, im Falle einer destillativen Reinigung der Rohstoffe im letzten Schritt der Herstellung, die feste Phase nicht durchlaufen haben, also eine Schmelze- bzw. Mischschmelze der Rohstoffe in die Umesterungsreaktion eingesetzt wird oder zumindest eines der Rohstoffe flüssig dosiert wird.

Festbettkatalysatoren im Sinne des erfindungsgemäßen Verfahrens sind Zeolithe und polymere, thermisch stabile, heterogene Katalysatoren.

Die erfindungsgemäß einzusetzenden Zeolithe sind als solche literaturbekannt, siehe z.B. Kirk-Othmer "Encyclopedia of Chemical Technology", 2nd Ed. 1964, Vol. 5, S. 541-561.

Eingesetzt werden können erfindungsgemäß, wie in dem genannten Artikel klassifiziert z.B. Kaolin-Typen wie Kaolinit, Dickerit, Nacrit (alle Al₂O₃ x 2 SiO₂ x 2 H₂O) oder Anauxit (Al₂O₃ x 3 SiO₂ x 2 H₂O) oder Halloysit (Al₂O₃ x 2 SiO₂ x 2 H₂O) oder Endellit (Al₂O₃ x 2 SiO₂ x 4 H₂O) sowie die durch Erhitzen aus den Kaolintypen hergestellten Spinel-Typen,
ferner Serpentin-Typen, in denen 3 Mg-Ionen, 2 Al-Ionen - ausgehend von den Kaolin-Typen- ersetzt haben (Mg₃Si₂O₅(OH)₄). Zu den Serpentin-Typen gehören ferner Amesit ((Mg₂Al)(SiAl)O₅(OH)₄) und Cronstedit (Fe₂²⁺Fe³⁺) (SiFe³⁺)O₅(OH)₄ sowie Chamosit (Fe²⁺, Mg)_{2,3} (Fe³⁺Al)_{0,7}(Si_{1,14}Al_{0,86})O₅(OH)₄ sowie die z.T. auch synthetisch zugänglichen Nickel- oder Kobaltspezies.

Weiterhin können Alumosilikate des Montmorillonit-Typs eingesetzt werden, wie zum Beispiel

Montmorillonit [Al_{1,67}Mg_{0,33}(Na_{0,33})]Si₄O₁₀(OH)₂

Beidellit Al_{2,17}[Al_{0,33}(Na_{0,33})]Si_{3,17}O₁₀(OH)₂

Nontronit Fe³⁺[Al_{0,33}(Na_{0,33})]Si_{3,67}O₁₀(OH)₂

Hectorit [Mg_{2,67}Li_{0,33}(Na_{0,33})]Si₄O₁₀(OH,F)₂

Saponit [Mg_{3,0}[Al_{0,33}(Na_{0,33})]Si_{3,67}]O₁₀(OH)₂

Sauconit [Zn_{1,48}Mg_{0,14}Al_{0,74}Fe³⁺][Al_{0,99}Si_{3,01}]O₁₀(OH)₂X_{0,33}

sowie Cu²⁺-, Co²⁺- oder Ni²⁺-haltige Typen (X = Halogen) wie Volkoskoit, Medmontit oder Pimelit.

Derartige Tonerden können für sich allein oder als Gemisch von zwei oder mehreren Tonerden verwendet werden und können die für diese Naturprodukte üblichen Verunreinigungen enthalten, wie sie zum Beispiel in Bentonit üblich sind (= Montmorillonite mit Resten Feldspat, Quarz etc.).

Bevorzugt sind die als "Montmorillonit-Typen" beschriebenen Tonerden und besonders bevorzugt Montmorillonit selbst. Bevorzugt sind ferner Alumosilikate des Typs der Zeolithe.

Bei den erfindungsgemäß einzusetzenden Zeolithen handelt es sich um kristalline, wasserhaltige Alumosilikate, synthetisiert oder natürlich vorkommend, mit Gerüststruktur (s. D.W.Breck in "Zeolite Molekular Sieves", Wiley Interscience, 1974, S. 133-180; Ullmanns Enzyklopädie der Technischen Chemie, 4. Aufl., Band 17, S. 9-18, Verlag Chemie, Weinheim, New York). Bevorzugt sind solche der nachfolgenden Formel:

M_{2/n}O Al₂O₃ x SiO₂ yH₂O

in welcher
- M: für Protonen oder Metallkationen der Gruppe Ia, IIa, IIIa, IVa, Va, VIa, VIIa, VIIIa, Ib, IIb, IIIb und IVb, bevorzugt fiir Protonen oder Metallkationen der Gruppe Ia, IIa, IVa und IVb, besonders bevorzugt für H⁺, Na⁺, K⁺, Cs⁺, Ca⁺, Mg²⁺, Zn²⁺, La³⁺, Pr³⁺ oder Ce³⁺ steht,
- n: für die Wertigkeit des Metallkations steht,
- x: für das Molverhältnis SiO₂/Al₂O₃ steht,
wobei X eine Zahl von 1,0 bis 50,0, bevorzugt 2,0 bis 25,0 sein kann und
- y: für eine Zahl von 0, 1 - 9 steht.

Geeignet für das erfindungsgemäße Verfahren sind Zeolithe der Struktur A und der Faujasitstruktur (Typ XUY), L, ZSM, Mordenit, Offretit, Phillipsit, Sodalith, femer zeolithähnliche Materialien wie AlPO's, SAPO's und besonders geeignet sind Zeolithe der Struktur A, der Faujasit-Struktur (X,Y-Typ), L, Mordenit, Offretit und ganz besonders bevorzugt sind Zeolithe der Struktur A, der Faujasit-Struktur (X und Y) und Mordenit.

Zu den erfindungsgemäßen polymeren, thermisch stabilen Festbettkatalysatoren zählen beispielsweise auch die literaturbekannten (Polymer, 1992, Volume 33, Nr. 8, S. 1773) Polybenzimidazole.

Die Katalysatoren werden in Konzentrationen von 10⁻⁸ Gew.-% bis 95 Gew.-%, bevorzugt von 10⁻⁶ Gew.-% bis 80 Gew.-%, bezogen auf eingesetztes Diphenol, eingesetzt.

Die Polycarbonatherstellung erfolgt, indem die aromatischen Dihydroxyverbindungen und die Kohlensäurediester nach den aus der Literatur üblichen Polykondensationsbedingungen umgesetzt werden. Dies sind beispielsweise im ersten Schritt die Umsetzung der aromatischen Dihydroxyverbindungen und des Kohlensäurediesters bei Temperaturen von 80°C bis 240°C, bevorzugt 100°C bis 230°C, besonders bevorzugt 120°C bis 200°C unter normalem Druck in 0 bis 5 Stunden, bevorzugt 0,25 bis 3 Stunden am erfindungsgemäßen Katalysator zu den entsprechenden Oligocarbonaten. Im weiteren liegt die Temperatur zur Vervollständigung dieser Oligocarbonate an den erfindungsgemäßen Festbettkatalysatoren zwischen 100°C und 290°C, bevorzugt zwischen 150°C und 280°C. Die bei der Umesterung zum Oligocarbonat entstehenden Monophenole werden durch Anlegen von Vakuum von 1 bar bis 0,5 bar, bevorzugt <500 mbar bis 1 mbar, entfernt.

Die so erhaltenen Oligocarbonate weisen mittlere Gewichtsmittelmolekulargewichte _{w} von 3000 bis 24 000, bevorzugt von 5000 bis 20 000 auf, ermittelt durch Messung der rel. Lösungsviskosität in Dichlormethan oder in Mischungen gleicher Gewichtsmengen Phenol/o-Dichlorbenzol, geeicht durch Lichtstreuung. Für die weitere Polykondensation dieses Oligocarbonats kann der Festbettkatalysator entfernt werden, indem er beispielsweise abfiltriert und zentrifugiert wird, bevorzugt ist der stationäre Festbettkatalysator, an dem das Oligocarbonat vorbeifließt.

In dieser darauffolgenden Stufe der Polykondensation des Oligocarbonats wird durch weiteres Erhöhen der Temperatur auf 230°C bis 400°C, bevorzugt auf 250°C bis 320°C und bei einem Druck <100 mbar bis 0,01 mbar das Polycarbonat hergestellt.

Sofern in dieser Stufe der Polykondensation des Oligocarbonats kein Festbettkatalysator mehr gegenwärtig ist, kann durch die Zugabe eines Alkali-/Erdalkalimetallkatalysators zu dem Oligocarbonat und durch weiteres Erhöhen der Temperatur auf 230°C bis 400°C, bevorzugt auf 250°C bis 320°C und bei einem Druck <100 mbar bis 0,01 mbar das Polycarbonat hergestellt werden.

Die Alkali-/Erdalkalimetallkatalysatoren werden bevorzugt in Mengen von 10⁻⁸ bis 10⁻⁴ Mol, bezogen auf 1 Mol Diphenol, besonders bevorzugt in einer Konzentration von 10⁻⁷ bis 10⁻⁵ Mol eingesetzt. Es werden beispielsweise die Lithium-, Natrium-, Kalium-, Cäsium-, Calcium-, Barium-, Magnesium-, -hydroxide, -carbonate, -halogenide, -phenolate, -diphenolate, -fluoride, -acetate, -phosphate, -hydrogenphosphate, -boranate verwendet. Die Mitverwendung von Alkali- bzw. Erdalkalimetallkatalysatoren widerspricht nicht der vorstehend erwähnten Forderung nach Reinheit der Reaktionspartner.

Diese Alkali-/Erdalkalimetallkatalysatoren können auch in Kombination (zwei oder mehrere) miteinander eingesetzt werden.

Die Zugabe des Alkali-/Erdalkalimetallkatalysators kann entweder als Feststoff oder als Lösung in Wasser, Phenol, Oligocarbonat oder Polycarbonat erfolgen.

Der letzte Schritt, die Polykondensation, wird bevorzugt in kurzen Zeiten <1h, bevorzugt <30min durchgeführt. Hierfür eignen sich Hochviskosreaktoren, einfache Scheibenreaktoren und Hochviskosscheibenreaktoren, Kneter, Schneckenmaschinen, also z.B. eine ZSK.

Die aromatischen Polycarbonate des erfindungsgemäßen Verfahrens sollen mittlere Gewichtsmittelmolekulargewichte _{w} von 18 000 bis 60 000, vorzugsweise von 19 000 bis 40 000 haben, ermittelt durch Messung der rel. Lösungsviskosität in Dichlormethan oder in Mischungen gleicher Gewichtsmengen Phenol/o-Dichlorbenzol, geeicht durch Lichtstreuung.

Dies wird dadurch erreicht, dass bevorzugt niedrigmolekulare Oligocarbonate durch Monophenoldestillation zu niedrigviskosen Polycarbonaten und höhermolekulare Oligocarbonate zu höherviskosen Polycarbonaten polykondensiert werden.

Die Reaktion der aromatischen Dihydroxyverbindung und des Kohlensäurediesters am erfindungsgemäß einzusetzenden Festbettkatalysator kann im Sinne des erfindungsgemäßen Verfahrens kontinuierlich oder diskontinuierlich, bevorzugt kontinuierlich, beispielsweise in Rührkesseln/Rührkesselkaskaden oder Rohrreaktoren durch Überströmen über den Festbettkatalysator durchgeführt werden.

Die OH-Endgruppengehalte von den Gesamtendgruppengehalten der erfindungsgemäß erhältlichen Polycarbonate sollen <30 %, bevorzugt <25 %, besonders bevorzugt <20 % und ganz besonders bevorzugt <10 % liegen.

Die als Zwischenstufe erhältlichen Oligocarbonate können auch isoliert, z.B. granuliert und anschließend in einem separaten Schritt polykondensiert werden.

Die Umsetzung des Oligocarbonats zum Polycarbonat kann auch entsprechend der WO 90/7536 bzw. des EP-A-338 085 erfolgen, indem das erfindungsgemäß hergestellte Oligocarbonat kristallisiert und in der festen Phase festphasenpolykondensiert wird.

Zur Begrenzung der mittleren Gewichtsmolmassen _{w} der Polymeren können in bekannter Weise (EP-360 578) Molmassenregler, wie beispielsweise Alkylphenol (Isooctylphenol, t-Butylphenol, Cumylphenol), in den erforderlichen Mengen eingesetzt werden.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane oder Polystyrole.

Der Zusatz dieser Stoffe erfolgt vorzugsweise auf herkömmlichen Aggregaten zum fertigen Polycarbonat, kann jedoch, je nach den Erfordernissen, während des Ablaufs des erfindungsgemäßen Verfahrens erfolgen.

Darüber hinaus ist für besondere Anwendungen auch die Modifizierung der erfindungsgemäß erhältlichen Polycarbonate durch Einkondensation von Blöcken, Segmenten und Comonomeren möglich, z.B. Siloxanblöcke mit phenolischen OH-Endgruppen, aromatische und aliphatische Polyester mit phenolischen OH- und Carbonsäure-Endgruppen, Polyphenylensulfid-Blöcke mit phenolischen OH-Endgruppen oder Polyphenylenoxid-Blöcke mit phenolischen OH-Endgruppen.

Die erfindungsgemäß hergestellten Polycarbonate eignen sich für die üblichen Anwendungsgebiete, also in der Elektrotechnik, im Bausektor und im Kraftfahrzeugbau somit z.B. als Trägermaterial für Datenspeicher, für Stegplatten zur Abdeckung oder als Gehäusematerial von elektronischen Geräten.

### Beispiele:

### Beispiel 1:

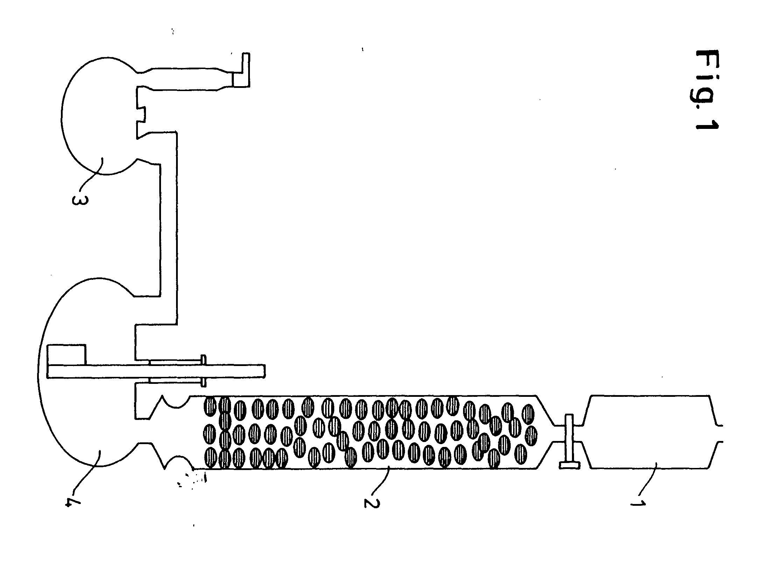

In einem ölmantelbeheizten Vorratsbehälter (1) wird das Reaktionsgemisch von 25,18 g/h Bisphenol-A (100 Mol-%) und 24,82 g/h Diphenylcarbonat (105 Mol-%) aufgeschmolzen. Anschließend wird das aufgeschmolzene Eduktgemisch bei 196°C/80 mbar über eine mit 180 g Baylith TE 144 gefüllte Säule (2) (Ölmantelheizung 196°C) geleitet. Die Säulenhöhe beträgt 46 cm, der Säulendurchmesser 30 mm. Dabei wird Phenol abdestilliert (3) und das Oligocarbonat mit der rel. Lösungsviskosität im Bereich von 1,028 bis 1,037 - diese Schwankungsbreite wird im Verlauf der Stunde bestimmt - (Dichlormethan, 25°C) aufgefangen (4) - s. Figur. 1.

Das aus der Apparatur gemäß Figur 1 gewonnene Oligocarbonat wird in einem gerührten Kolben mit aufgesetzter Kolonne überführt und das Vakuum stufenweise bis auf 1 mbar verbessert und die Temperatur auf 260°C erhöht. Man erhält dann ein farbhelles, lösungsmittelfreies Oligocarbonat mit einer rel. Lösungsviskosität von 1,157 (Dichlormethan, 25°C, 5 g/l). Dem Oligocarbonat werden nun NaOH (5*10⁻⁴ Mol-%), bezogen auf Bisphenol A, als 1 %ige wässrige Lösung zugegeben und das Oligocarbonat bei 280°C und 0,1 mbar 1,5 Stunden gerührt. Man erhält ein farbhelles, lösungsmittelfreies Polycarbonat mit einer rel. Lösungsviskosität von 1,305 (Dichlormethan, 25°C, 5 g/l). Der phenolische OH-Wert des Polycarbonats beträgt 220 ppm.

### Beispiel 2:

Wie Beispiel 1, nur anstatt des Zeolithtyps Baylith TE 144 wird die gleiche Menge Baylith SV 133 in die Säule gefüllt. Es wird dann ein Oligocarbonat mit der rel. Lösungsviskosität im Bereich von 1,028 bis 1,033 (Dichlormethan, 25°C) aufgefangen und das erhaltene farbhelle, lösungsmittelfreie Polycarbonat weist eine rel. Lösungsviskosität von 1,298 (Dichlormethan, 25°C, 5 g/l) und einen phenolischen OH-Wert von 310 ppm auf.

### Beispiel 3:

Wie Beispiel 1, nur anstatt des Zeolithtyps Baylith TE 144 wird die gleiche Menge Polybenzimidazol in die Säule gefüllt. Man erhält dann ein Oligocarbonat mit der rel. Lösungsviskosität im Bereich von 1,025 bis 1,031 (Dichlormethan, 25°C) und das erhaltene farbhelle, lösungsmittelfreie Polycarbonat weist eine rel. Lösungsviskosität von 1,258 (Dichlormethan, 25°C, 5 g/l) und einen phenolischen OH-Wert von 380 ppm auf.

### Beispiel 4:

Wie Beispiel 1, nur wird auf die Zugabe des Alkalikatalysators verzichtet. Das erhaltene farbhelle, lösungsmittelfreie Polycarbonat weist eine rel. Lösungsviskosität von 1,228 (Dichlormethan, 25°C, 5 g/l) und einen phenolischen OH-Wert von 420 ppm auf.

### Beispiel 5:

Wie Beispiel 1, nur wird die Säule mit einer Temperatur von 210°C und bei einem Druck von 60 mbar betrieben. Man erhält dann ein Oligocarbonat mit der rel. Lösungsviskosität im Bereich von 1,035 bis 1,042 (Dichlormethan, 25°C) aufgefangen und das erhaltene farbhelle, lösungsmittelfreie Polycarbonat weist eine rel. Lösungsviskosität von 1,310 (Dichlormethan, 25°C, 5 g/l) und einen phenolischen OH-Wert von 230 ppm auf.

## Patentansprüche

1. Schmelzumesterungsverfahren zur Herstellung von thermoplastischem Polycarbonat, ausgehend von Diphenolen, Kohlensäurediarylestern und gegebenenfalls Verzweigern und/oder Monophenolen unter Verwendung von Katalysatoren bei Temperaturen zwischen 80°C und 400°C und Drücken von 1000 mbar bis 0,01 mbar, **dadurch gekennzeichnet, dass** man als Katalysatoren Festbettkatalysatoren verwendet und zumindest einer der Rohstoffe flüssig eingesetzt wird, wobei die Festbettkatalysatoren Zeolithe oder polymere, thermisch stabile, heterogene Katalysatoren sind.

2. Verfahren gemäß Anspruch 1, **dadurch gekennzeichnet, dass** als Festbettkatalysatoren Alumosilikate eingesetzt werden.

3. Verfahren gemäß Anspruch 1, **dadurch gekennzeichnet, dass** als Festbettkatalysatoren Polybenzimidazole eingesetzt werden.

4. Verfahren gemäß Ansprüche 1 bis 3, **dadurch gekennzeichnet, dass** die Umesterung kontinuierlich durch Überströmen über den Festbettkatalysator erfolgt.

5. Verfahren gemäß Ansprüche 1 bis 3, **dadurch gekennzeichnet, dass** die Katalysatoren in Konzentrationen von 10⁻⁸ Gew.-% bis 95 Gew.-%, bezogen auf eingesetztes Diphenol, eingesetzt werden.

6. Verfahren gemäß Anspruch 1, **dadurch gekennzeichnet, dass** zusätzlich ein Alkali-/Erdalkalimetallkatalysator verwendet wird.

7. Schmelzumesterungsverfahren zur Herstellung von thermoplastischem Oligocarbonat, ausgehend von Diphenolen, Kohlensäurediarylestern und gegebenenfalls Verzweigern und/oder Monophenolen unter Verwendung von Katalysatoren bei Temperaturen zwischen 80°C und 290°C und Drücken von 1000 mbar bis 0,5 mbar, **dadurch gekennzeichnet, dass** man als Katalysatoren Festbettkatalysatoren einsetzt und zumindest einer der Rohstoffe flüssig eingesetzt wird, wobei die Festbettkatalysatoren Zeolithe oder polymere, thermisch stabile, heterogene Katalysatoren sind.

8. Verfahren gemäß Anspruch 6, **dadurch gekennzeichnet, dass** die Umesterung in zwei Stufen durchgeführt wird, wobei in der ersten Stufe zur Oligocarbonatherstellung die Festbettkatalysatoren eingesetzt werden und die 2. Stufe, die Polykondensationsstufe, unter Zugabe von Alkali-/Erdalkalikatalysatoren durchgeführt wird.

## Claims

1. A melt transesterification process for producing thermoplastic polycarbonate, starting from diphenols, carboxylic acid diaryl esters and optionally branching agents and/or monophenols, with the use of catalysts at temperatures between 80°C and 400°C and pressures of 1000 mbar to 0.01 mbar, **characterised in that** fixed bed catalysts are used as catalysts and at least one of the raw materials is used in liquid form, the fixed bed catalysts being zeolites or polymeric, thermally stable, heterogeneous catalysts.

2. A process according to claim 1, **characterised in that** aluminosilicates are used as the fixed bed catalysts.

3. A process according to claim 1, **characterised in that** polybenzimidazoles are used as the fixed bed catalysts.

4. A process according to claims 1 to 3, **characterised in that** the transesterification is effected continuously by overflow over the fixed bed catalyst.

5. A process according to claims 1 to 3, **characterised in that** the catalysts are used in concentrations from 10⁻⁸ % by weight to 95 % by weight, with respect to the diphenol used.

6. A process according to claim 1, **characterised in that** an alkali/alkaline earth metal catalyst is used in addition.

7. A melt transesterification process for producing thermoplastic oligocarbonate, starting from diphenols, carboxylic acid diaryl esters and optionally branching agents and/or monophenols, with the use of catalysts at temperatures between 80°C and 290°C and pressures of 1000 mbar to 0.5 mbar, **characterised in that** fixed bed catalysts are used as catalysts and at least one of the raw materials is used in liquid form, the fixed bed catalysts being zeolites or polymeric, thermally stable, heterogeneous catalysts.

8. A process according to claim 6, **characterised in that** the transesterification is effected in two steps, wherein in the first step the fixed bed catalysts are used for producing oligocarbonate ether, and the second step, the condensation polymerisation step, is effected with the addition of alkali/alkaline earth catalysts.

## Revendications

1. Procédé de transestérification à l'état fondu, pour la préparation de polycarbonates thermoplastiques, en partant de diphénols, de diesters aryliques d'acide carbonique et le cas échéant, d'agents de ramification et/ou de monophénols en utilisant des catalyseurs à des températures allant de 80°C à 400°C et sous des pressions allant de 1000 mbar à 0,01 mbar, **caractérisé en ce que** l'on utilise comme catalyseur, des catalyseurs en lit fixe et au moins l'une des matières premières est mise en oeuvre à l'état liquide, où les catalyseurs en lit fixe sont des zéolites ou des catalyseurs hétérogènes polymères, thermiquement stables.

2. Procédé suivant la revendication 1, **caractérisé en ce que** l'on met en oeuvre comme catalyseur en lit fixe, un aluminosilicate.

3. Procédé suivant la revendication 1, **caractérisé en ce que** l'on met en oeuvre comme catalyseur en lit fixe, un polybenzimidazole.

4. Procédé suivant les revendications 1 à 3, **caractérisé en ce que** la transestérification est réalisée de manière continue par passage sur le catalyseur en lit fixe.

5. Procédé suivant les revendications 1 à 3, **caractérisé en ce que** les catalyseurs sont mis en oeuvre en des concentrations allant de 10⁻⁸% en poids à 95% en poids, sur base des diphénols mis en oeuvre.

6. Procédé suivant la revendication 1, **caractérisé en ce que** l'on utilise en outre, des catalyseurs à métal alcalin/alcalino-terreux.

7. Procédé de transestérification à l'état fondu, pour la préparation d'oligocarbonates thermoplastiques, en partant de diphénols, de diesters aryliques d'acide carbonique et le cas échéant, d'agents de ramification et/ou de monophénols en utilisant des catalyseurs à des températures allant de 80°C à 290°C et sous des pressions allant de 1000 mbar à 0,5 mbar, **caractérisé en ce que** l'on utilise comme catalyseur, des catalyseurs en lit fixe et au moins l'une des matières premières est mise en oeuvre à l'état liquide, où les catalyseurs en lit fixe sont des zéolites ou des catalyseurs hétérogènes polymères, thermiquement stables.

8. Procédé suivant la revendication 6, **caractérisé en ce que** la transestérification est réalisée en deux étapes, où dans la première étape pour la préparation de l'oligocarbonate on met en oeuvre des catalyseurs en lit fixe et la deuxième étape, l'étape de polycondensation, est réalisée par addition de catalyseurs alcalins/alcalino-terreux.
